# FASCICULE DE BREVET EUROPEEN

(11) **EP 4 522 878 B1**
(45) Date de publication et mention de la délivrance du brevet: **21.01.2026**
(21) Numéro de dépôt: 23726011.2
(22) Date de dépôt: 09.05.2023
(51) Int. Cl.: F16C 27/04, F16C 35/077, F16C 19/52, F01D 25/16

(54) **PALIER À ROULEMENT COMPRENANT UN AMORTISSEUR À COMPRESSION DE FILM D'HUILE AYANT UNE LONGUEUR MODIFIABLE**
WÄLZLAGER MIT EINEM ÖLFILMKOMPRESSIONSDÄMPFER MIT VERÄNDERBARER LÄNGE
ROLLING BEARING WITH SQUEEZE FILM DAMPER HAVING CHANGEABLE LENGTH

(30) Priorité: 10.05.2022 FR 2204416
(43) Date de publication de la demande: 19.03.2025
(73) Titulaire: SAFRAN AIRCRAFT ENGINES, 75015 Paris (FR)
(72) Inventeur: GARNIER, Florian, 77550 MOISSY-CRAMAYEL (FR); NOYER, Cécile, 77550 MOISSY-CRAMAYEL (FR); SOUBEYROUX, Morgane, 77550 Moissy-Cramayel (FR); ZUCKERFELD, Charlotte, 77550 Moissy-Cramayel (FR)
(74) Mandataire: Santarelli
(86) Numéro de dépôt international: PCT/EP2023/062307
(87) Numéro de publication internationale: WO 2023/217797

(56) Documents cités:
- JP-A- 2017 194 159
- JP-A- H06 109 018
- US-A- 5 058 452

## Description

### DOMAINE TECHNIQUE

L'invention concerne un palier à roulement monté sur suspension souple équipé d'un amortisseur à compression de film d'huile, destiné à équiper une turbomachine telle qu'un turboréacteur.

### ÉTAT DE LA TECHNIQUE ANTÉRIEURE

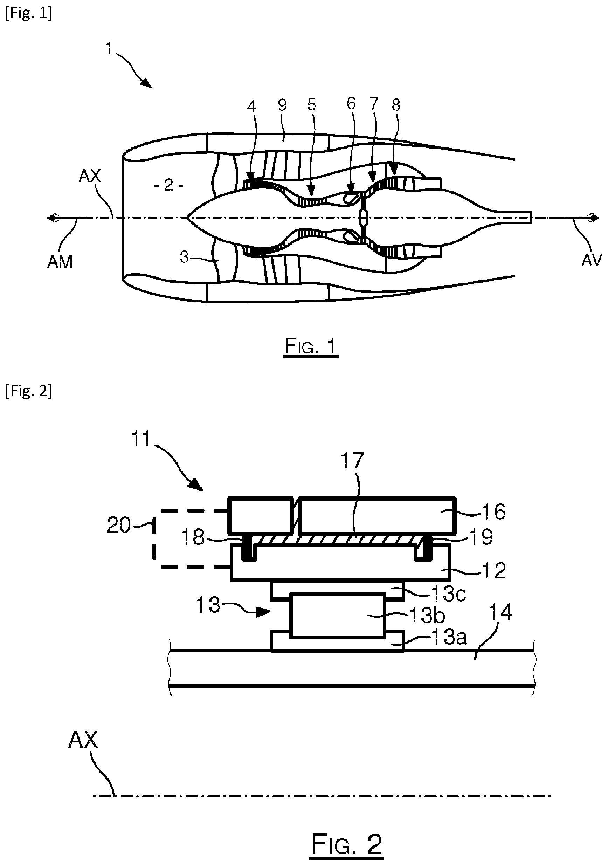

Dans un moteur de type turboréacteur, repéré par 1 dans la figure 1, l'air est admis dans une manche d'entrée 2 située à l'amont AM pour traverser une soufflante comportant une série de pales rotatives 3 avant de se scinder en un flux primaire central et un flux secondaire entourant le flux primaire.

Le flux primaire est compressé par des compresseurs basse pression 4 et haute pression 5 avant d'atteindre une chambre de combustion 6, après quoi il se détend en traversant une turbine haute pression 7 et une turbine basse pression 8, avant d'être évacué à l'aval AVen générant une poussée auxiliaire. Le flux secondaire est quant à lui propulsé directement par la soufflante vers l'aval AV pour générer une poussée principale. Chaque turbine 7, 8 comporte des séries d'aubes orientées radialement et régulièrement espacées autour d'un axe de rotation AX, un carter externe 9 entourant l'ensemble du moteur.

Dans le cas d'un turboréacteur double corps, le compresseur haute pression et la turbine haute pression font partie d'un corps haute pression qui entoure un tourillon basse pression en tournant à une vitesse différente de celui-ci, ce tourillon basse pression portant le compresseur basse pression et la turbine basse pression.

Le tourillon basse pression et le corps haute pression sont portés en amont et en aval, par des paliers logés dans des enceintes les isolant du reste du moteur. Chaque palier est lubrifié par de l'huile circulant dans l'enceinte qui l'entoure, et qui est délimitée par des éléments fixes et par l'élément rotatif qui la traverse.

Un tel palier qui est porté par un support tout en étant entouré par l'enceinte est généralement de type à roulement monté sur suspension souple en étant équipé d'un amortisseur à compression de film d'huile.

En pratique, un tel palier, représenté sur la figure 2 où il est repéré par 11, comporte un manchon interne 12 recevant une bague externe d'un roulement 13 portant un élément rotatif 14 qui est par exemple un tourillon basse pression ou un corps haute pression. Ce roulement 13 comporte plus particulièrement une bague interne 13a, des éléments roulants 13b qui sont ici des rouleaux, et une bague externe 13c. Ce palier 11 comporte également un manchon externe 16 de plus grand diamètre qui entoure coaxialement le manchon interne 12 en étant radialement espacé de celui-ci, de sorte que ces deux manchons délimitent conjointement une cavité interne de révolution 17. Cette cavité est fermée par deux segments 18 et 19 situés à ses extrémités qui sont portés par le manchon interne 12.

Le manchon interne 12 est solidarisé au reste du palier par une liaison flexible offrant à ce manchon interne une mobilité limitée selon la direction radiale par rapport à l'axe AX de rotation de l'élément rotatif.

La cavité interne 17 est pressurisée avec de l'huile, de sorte qu'en cas de balourd de l'élément rotatif 14, le manchon interne 12 s'excentre de l'axe AX en direction du balourd sous l'effet des efforts centrifuge que ce balourd engendre, de sorte qu'en fonctionnement cette excentration tourne avec l'élément rotatif. La pressurisation hydraulique de la cavité 17 permet ainsi d'amortir l'excentration pour limiter les vibrations engendrées par la présence du balourd.

D'une manière générale, un tel système permet d'assurer un amortissement des vibrations qui est limitée à une plage donnée de régimes du moteur.

Le document JP 2017 194159 A montre un palier muni d'une cavité alimentée hydrauliquement, ladite cavité comportant plusieurs portions séparées par un segment fixe.

Le but de l'invention est d'apporter une solution permettant à un tel système d'assurer un amortissement pour différentes conditions de fonctionnement du moteur.

### EXPOSÉ DE L'INVENTION

A cet effet, l'invention a pour objet un palier pour turbomachine comprenant un amortisseur à compression de film d'huile, incluant un manchon interne destiné à recevoir une bague externe d'un roulement, un manchon externe entourant le manchon interne et délimitant avec ce manchon interne une cavité de révolution alimentée hydrauliquement pour constituer un film d'huile d'amortissement, cette cavité étant fermée à ses extrémités par deux segments, caractérisé en ce que la cavité comporte une première portion et une deuxième portion séparées l'une de l'autre par un segment mobile radialement pouvant occuper une position de fermeture dans laquelle il constitue une barrière d'étanchéité contrôlée entre les deux portions, et une position d'ouverture dans laquelle les deux portions communiquent entre elles, et en ce que la première portion est alimentée hydrauliquement pour constituer le film d'huile.

L'invention permet de modifier la géométrie de la cavité renfermant le film d'huile amortissant, en plaçant le segment mobile à sa position d'ouverture ou à sa position de fermeture pour que la cavité ait une longueur maximale ou minimale. Cela permet d'obtenir deux valeurs d'amortissement, et par là-même, d'assurer un amortissement sur deux plages de régimes du moteur.

L'invention concerne également un palier ainsi défini, comprenant une gorge circonférentielle formée à une face interne du manchon externe, dans lequel le segment mobile est escamoté dans cette gorge lorsqu'il occupe sa position d'ouverture, et dans lequel le segment mobile est hors de cette gorge en appui sur une face externe du manchon interne lorsqu'il occupe sa position de fermeture.

L'invention concerne également un palier ainsi défini, comprenant des trous radiaux traversant une face externe du manchon externe et débouchant au fond de la gorge, dans lequel le segment mobile comporte plusieurs secteurs en arc de cercles pourvus chacun d'un plot coulissant dans un trou radial.

L'invention concerne également un palier ainsi défini, dans lequel le segment mobile est formé de trois secteurs ayant chacun une étendue angulaire de 120 degrés.

L'invention concerne également un palier ainsi défini, comprenant un actionneur coopérant avec les plots pour les déplacer radialement de manière à commander le segment mobile pour le déplacer de sa position d'ouverture à sa position de fermeture et inversement.

L'invention concerne également un palier ainsi défini, comprenant un circuit de commande hydraulique ou pneumatique coopérant avec les plots pour les déplacer radialement de manière à commander le segment mobile pour le déplacer de sa position d'ouverture à sa position de fermeture et inversement.

L'invention concerne également un palier ainsi défini, dans lequel le circuit de commande comporte une cavité circonférentielle s'étendant dans l'épaisseur du manchon externe et dans laquelle débouchent les extrémités des plots, cette cavité circonférentielle étant alimentée hydrauliquement ou pneumatiquement.

L'invention concerne également une turbomachine équipée d'un palier ainsi défini. L'invention concerne également un turboréacteur comprenant une turbomachine ainsi définie.

### BRÈVE DESCRIPTION DES DESSINS

La [Fig. 1] est une vue en coupe longitudinale d'un turboréacteur à double flux connu ;
La [Fig. 2] est une vue en coupe longitudinale partielle d'un palier intégrant un amortisseur à film d'huile connu ;
La [Fig. 3] est une vue en coupe longitudinale partielle d'un palier intégrant un amortisseur à film d'huile selon l'invention lorsque sa cavité interne a une longueur maximale ;
La [Fig. 4] est une vue de face du segment mobile de l'amortisseur à film d'huile selon l'invention lorsqu'il est en position d'ouverture ;
La [Fig. 5] est une vue en coupe longitudinale partielle d'un palier intégrant un amortisseur à film d'huile selon l'invention lorsque sa cavité interne a une longueur minimale ;
La [Fig. 6] est une vue de face du segment mobile de l'amortisseur à film d'huile selon l'invention lorsqu'il est en position de fermeture ;
La [Fig. 7] est une vue en coupe longitudinale partielle d'un palier intégrant un amortisseur à film d'huile selon une variante de l'invention lorsque sa cavité interne a une longueur maximale ;
La [Fig. 8] est une vue en coupe longitudinale partielle d'un palier intégrant un amortisseur à film d'huile selon une variante de l'invention lorsque sa cavité interne a une longueur minimale.

### EXPOSÉ DÉTAILLÉ DE MODES DE RÉALISATION PARTICULIERS

L'idée à la base de l'invention est de modifier la géométrie de la cavité de révolution du palier qui est pressurisée pour disposer de deux longueurs possibles de de film d'huile en fonctionnement, grâce à un segment d'étanchéité à deux positions.

Ces deux longueurs permettent d'avoir deux valeurs d'amortissement distinctes en utilisant une pression d'alimentation fixe. Ces deux valeurs permettent de modifier l'amortissement assuré par la cavité sur deux plages données de fréquences, c'est-à-dire sur deux plages de régimes du moteur.

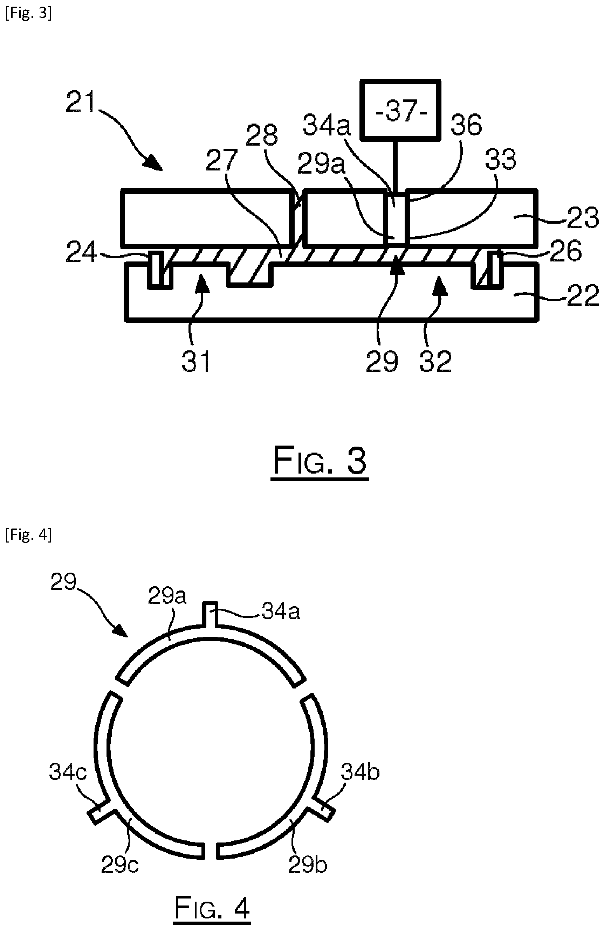

Sur la figure 3, un palier 21 comporte un manchon interne 22 recevant une bague externe d'un roulement portant un tourillon basse pression ou un corps haute pression. Ce palier 21 comporte un manchon externe 23 qui entoure coaxialement le manchon 22 en en étant radialement espacé pour délimiter avec celui-ci une cavité interne de révolution 27. Cette cavité est fermée par deux segments 24 et 26 situés à ses extrémités qui sont portés par le manchon interne 22.

Le manchon interne 22 est solidarisé au reste du palier par une liaison flexible 20 représentée schématiquement sur la figure 3, qui lui confère une mobilité limitée selon la direction radiale par rapport à l'axe AX de rotation de l'élément rotatif.

Le manchon externe 23 comporte des trous radiaux reliés à un circuit hydraulique non représenté pour pressuriser la cavité interne 27 avec de l'huile, l'un de ces trous étant repéré par 28 sur les figures. Un balourd de l'élément rotatif tend à excentrer le manchon interne 22 de l'axe AX dans la direction du balourd sous l'effet des efforts centrifuge que ce balourd engendre, attendu qu'en fonctionnement cette excentration tourne avec l'élément rotatif. La pressurisation hydraulique de la cavité 27 permet d'amortir le mouvement rotatif d'excentration du manchon interne 22 pour limiter les vibrations engendrées dans l'ensemble du moteur par le balourd.

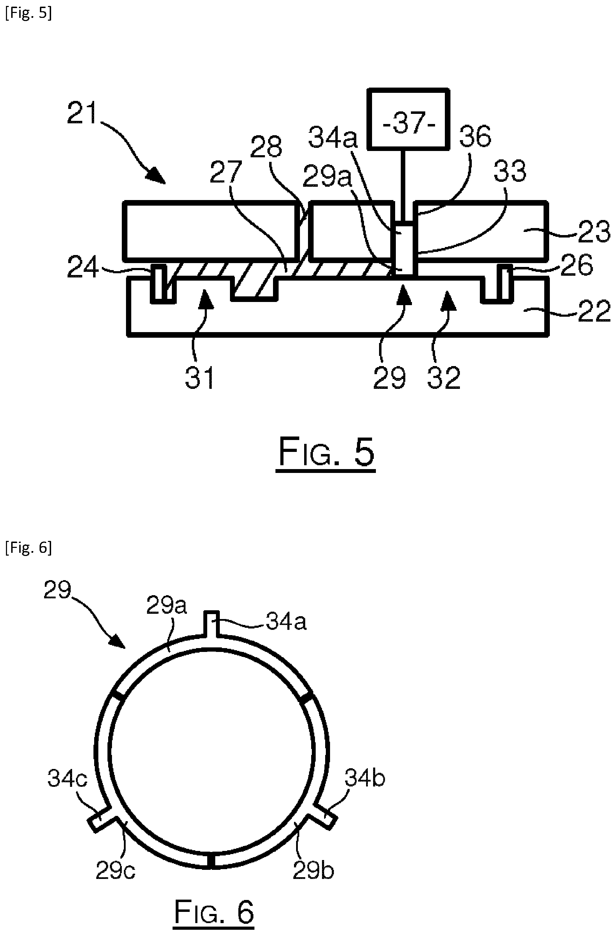

Selon l'invention, la cavité 27 est équipée d'un segment 29 qui est mobile radialement entre une position d'ouverture correspondant aux figures 3 et 4, et une position de fermeture correspondant aux figures 5 et 6.

Lorsqu'il occupe sa position de fermeture, le segment 29 sépare la cavité 27 en une première portion 31 qui est hydrauliquement pressurisée et une deuxième portion 32 qui n'est pas pressurisée, de sorte que la cavité 27 a alors une longueur réduite à celle de sa première portion. Le segment 29 constitue alors une barrière d'étanchéité contrôlée entre les deux portions, attendu qu'il limite le transfert d'huile d'une portion à l'autre à une valeur de débit la plus faible possible et idéalement nulle.

Lorsqu'il occupe sa position d'ouverture, le segment 29 met en communication les première et deuxième portions 31 et 32 de la cavité 27 pour que cette cavité 27 ait une longueur étendue, c'est-à-dire maximale.

Ce segment mobile 29 est logé dans une gorge 33 dans la face interne du manchon externe 23, de telle manière que lorsqu'il occupe sa position d'ouverture, ce segment 29 est entièrement escamoté dans la gorge. Lorsqu'il occupe sa position de fermeture, ce segment 29 sort de la gorge vers l'axe AX de manière à enserrer la face externe du manchon interne 22 pour constituer une séparation étanche circonférentielle interposée entre la première portion 31 et la deuxième portion 32. Le segment mobile radialement 29 a ainsi un diamètre plus important lorsqu'il est en position d'ouverture que lorsqu'il est en position de fermeture.

A cet effet, le segment mobile 29 peut être formé de trois secteurs 29a, 29b et 29c de 120 degrés chacun, comme visible sur les figures 4 et 6. Le secteur 29a a une forme de portion de couronne plane pourvue dans sa région centrale d'un plot radial 34a s'étendant à l'opposé de l'axe AX. Les deux autres secteurs 29b et 29c sont identiques au secteur 29a et comportent chacun un plot radial 34b, 34c.

Le manchon externe 23 comporte quant à lui trois trous traversants radiaux espacés de 120 degrés autour de l'axe AX, qui débouchent chacun dans le fond de la gorge 33 et ont chacun un diamètre correspondant sensiblement à l'épaisseur des secteurs du segment, c'est-à-dire au diamètre des plots. Un de ces trous, repéré par 36, est visible sur les figures 3 et 5.

Le montage du secteur de segment 29a consiste ainsi à le placer dans la gorge 33 en engageant son plot 34a dans le trou radial correspondant 36 qui débouche dans le fond de cette gorge. Le segment 29 est entièrement monté dans le manchon externe 23 une fois que les deux autres secteurs 29b et 29c ont été engagés dans la gorge 33 avec leurs plots respectifs dans les deux trous radiaux restants, de la même manière.

Les plots radiaux 34a, 34b et 34c sont ainsi guidés par les trous radiaux dans lesquels ils sont engagés, pour être mobiles entre une position en appui en fond de gorge correspondant à la position d'ouverture du segment, et une position en appui à la face externe du manchon interne correspondant à la position de fermeture du segment.

Le segment 29 peut être commandé pour passer de sa position d'ouverture à sa position de fermeture et inversement, au moyen d'actionneurs commandés agissant sur les plots 34a, 34b et 34c, comme l'actionneur repéré par 37.

Cet actionneur 37 est par exemple un actionneur électrique, situé radialement à l'extérieur du manchon externe 23 et en vis-à-vis du trou radial 36, et qui comporte une tige mobile déplaçable radialement qui est en appui sur le plot 34a.

Cette commande peut aussi être assurée au moyen d'électro-aimants agissant sur ces plots, ou autre.

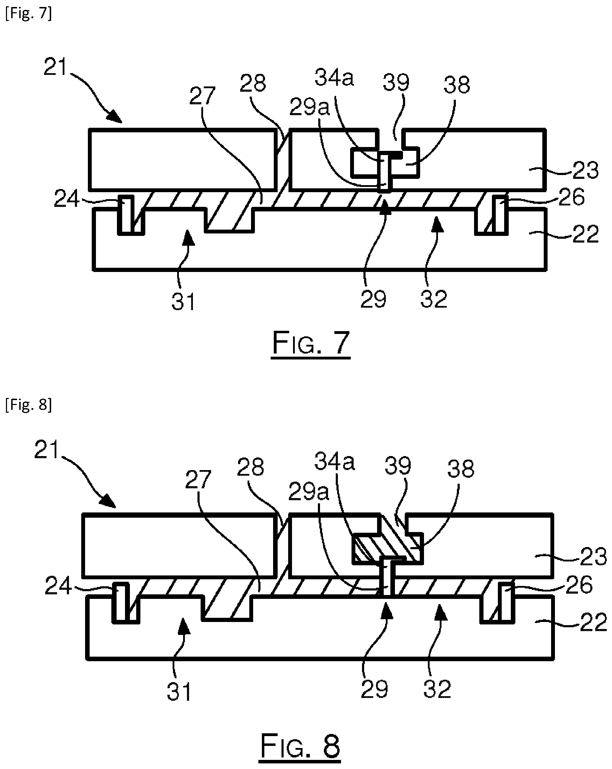

Dans l'exemple des figures 7 et 8, le déplacement des secteurs entre la position de fermeture et la position d'ouverture est assuré en connectant les trous radiaux à un circuit de commande hydraulique ou pneumatique, les plots 34a, 34b et 34c, de sorte que ces plots jouent le rôle de pistons.

La pressurisation du circuit de commande permet alors de rapprocher les plots de l'axe AX, et par là même les secteurs qui les portent pour que ces secteurs sortent de la gorge 33 et enserrent la face externe du manchon 22, ce qui correspond à la position de fermeture.

La dépressurisation du circuit de commande permet à l'inverse de permettre aux plots de se déplacer radialement vers l'extérieur pour que les secteurs rentrent dans la gorge 33, sous l'effet de la pression plus élevée régnant dans la cavité 27, ce qui correspond à la position d'ouverture.

Dans l'exemple des figures 7 et 8 ce circuit de commande comporte essentiellement une cavité circonférentielle 38 formée dans l'épaisseur du manchon externe 23, dans laquelle débouchent les plots 34a, 34b et 34c. Complémentairement, un orifice d'alimentation 39 traverse la face externe du manchon 23 pour déboucher dans la cavité 38, ce qui permet de la connecter à un circuit hydraulique ou pneumatique, pour la pressuriser afin de placer le segment 29 en position de fermeture comme sur la figure 8, ou pour la dépressuriser afin de placer ce segment en position d'ouverture comme sur la figure 7. D'une manière générale, le dimensionnement de la cavité 27 délimitant le film d'huile, le choix de la position du segment mobile 29 dans cette cavité permettent de définir deux niveaux d'amortissement et de les dimensionner correspondant par exemple à deux plages de régimes de fonctionnement du moteur. L'activation de l'un ou l'autre des amortissements est assuré en commandant le segment mobile pour qu'il occupe sa position de fermeture ou sa position d'ouverture.

## Revendications

1. Palier (21) pour turbomachine comprenant un amortisseur à compression de film d'huile, incluant un manchon interne (22) destiné à recevoir une bague externe d'un roulement, un manchon externe (23) entourant le manchon interne (22) et délimitant avec ce manchon interne (22) une cavité de révolution (27) alimentée hydrauliquement pour constituer un film d'huile d'amortissement, cette cavité (27) étant fermée à ses extrémités par deux segments (24, 26), **caractérisé en ce que** la cavité (27) comporte une première portion (31) et une deuxième portion (32) séparées l'une de l'autre par un segment mobile radialement (29) pouvant occuper une position de fermeture dans laquelle il constitue une barrière d'étanchéité contrôlée entre les deux portions (31, 32), et une position d'ouverture dans laquelle les deux portions (31, 32) communiquent entre elles, et **en ce que** la première portion (31) est alimentée hydrauliquement pour constituer le film d'huile.

2. Palier selon la revendication 1, comprenant une gorge circonférentielle (33) formée à une face interne du manchon externe (23), dans lequel le segment mobile (29) est escamoté dans cette gorge (33) lorsqu'il occupe sa position d'ouverture, et dans lequel le segment mobile (29) sort de cette gorge (33) pour être en appui sur une face externe du manchon interne (22) lorsqu'il occupe sa position de fermeture.

3. Palier selon la revendication 2, comprenant des trous radiaux (36) traversant une face externe du manchon externe (23) et débouchant au fond de la gorge (33), et dans lequel le segment mobile (29) comporte plusieurs secteurs (29a, 29b, 29c) en arc de cercles pourvus chacun d'un plot (34a, 34b, 34c) coulissant dans un trou radial (36).

4. Palier selon la revendication 3, dans lequel le segment mobile (29) est formé de trois secteurs (29a, 29b, 29c) ayant chacun une étendue angulaire de 120 degrés.

5. Palier selon la revendication 3, comprenant un actionneur (37) coopérant avec les plots (34a, 34b, 34c) pour les déplacer radialement de manière à commander le segment mobile (29) pour le déplacer de sa position d'ouverture à sa position de fermeture et inversement.

6. Palier selon la revendication 3, comprenant un circuit de commande hydraulique ou pneumatique coopérant avec les plots (34a, 34b, 34c) pour les déplacer radialement de manière à commander le segment mobile (29) pour le déplacer de sa position d'ouverture à sa position de fermeture et inversement.

7. Palier selon la revendication 6, dans lequel le circuit de commande comporte une cavité circonférentielle (38) s'étendant dans l'épaisseur du manchon externe (23) et dans laquelle débouchent les extrémités des plots (34a, 34b, 34c), cette cavité circonférentielle (38) étant alimentée hydrauliquement ou pneumatiquement.

8. Turbomachine équipée d'un palier selon l'une des revendications précédentes.

9. Turboréacteur comprenant une turbomachine selon la revendication précédente.

## Patentansprüche

1. Lager (21) für eine Turbomaschine, umfassend einen Ölfilm-Kompressionsdämpfer, der eine Innenmuffe (22), die dazu besitmmt ist, einen Außenring eines Wälzlagers aufzunehmen, und eine Außenmuffe (23) enthält, die die Innenmuffe (22) umgibt und mit dieser Innenmuffe (22) einen hydraulisch versorgten Umdrehungshohlraum (27) begrenzt, um einen Dämpfungsölfilm auszubilden, wobei dieser Hohlraum (27) an seinen Enden durch zwei Segmente (24, 26) verschlossen ist, **dadurch gekennzeichnet, dass** der Hohlraum (27) einen ersten Abschnitt (31) und einen zweiten Abschnitt (32) aufweist, die voneinander durch ein radial bewegliches Segment (29) getrennt sind, das eine Schließposition einnehmen kann, in der es eine gesteuerte Abdichtungsbarriere zwischen den beiden Abschnitten (31, 32) ausbildet, und eine Öffnungsposition, in der die beiden Abschnitte (31, 32) miteinander in Verbindung stehen, und dass der erste Abschnitt (31) hydraulisch versorgt wird, um den Ölfilm auszubilden.

2. Lager nach Anspruch 1, umfassend eine Umfangsnut (33), die an einer Innenseite der Außenmuffe (23) gebildet ist, wobei das bewegliche Segment (29) in dieser Nut (33) versenkt wird, wenn es seine Öffnungsposition einnimmt, und wobei das bewegliche Segment (29) aus dieser Nut (33) herauskommt, um an einer Außenseite der Innenmuffe (22) anzuliegen, wenn es seine Schließposition einnimmt.

3. Lager nach Anspruch 2, umfassend radiale Löcher (36), die eine Außenseite der Außenmuffe (23) durchqueren und an dem Boden der Nut (33) münden, und wobei das bewegliche Segment (29) mehrere kreisbogenförmige Sektoren (29a, 29b, 29c) aufweist, die jeweils mit einem Stift (34a, 34b, 34c) versehen sind, der in ein radiales Loch (36) gleitet.

4. Lager nach Anspruch 3, wobei das bewegliche Segment (29) aus drei Sektoren (29a, 29b, 29c) gebildet ist, die jeweils einen Winkelbereich von 120 Grad haben.

5. Lager nach Anspruch 3, umfassend einen Aktuator (37), der mit den Stiften (34a, 34b, 34c) zusammenwirkt, um diese radial zu bewegen, um das bewegliche Segment (29) zu steuern, um es von seiner Öffnungsposition in seine Schließposition und umgekehrt zu bewegen.

6. Lager nach Anspruch 3, umfassend einen hydraulischen oder pneumatischen Steuerkreis, der mit den Stiften (34a, 34b, 34c) zusammenwirkt, um diese radial zu bewegen, um das bewegliche Segment (29) zu steuern, um es von seiner Öffnungsposition in seine Schließposition und umgekehrt zu bewegen.

7. Lager nach Anspruch 6, wobei der Steuerkreis einen Umfangshohlraum (38) aufweist, der sich in der Dicke der Außenmuffe (23) erstreckt und in den die Enden der Stifte (34a, 34b, 34c) münden, wobei dieser Umfangshohlraum (38) hydraulisch oder pneumatisch versorgt wird.

8. Turbomaschine, die mit einem Lager nach einem der vorstehenden Ansprüche ausgestattet ist.

9. Turboreaktor, der eine Turbomaschine nach dem vorhergehenden Anspruch umfasst.

## Claims

1. Bearing (21) for a turbine engine comprising an oil film compression damper, including an inner sleeve (22) intended to receive an outer ring of a roller bearing, an outer sleeve (23) surrounding the inner sleeve (22) and delimiting with this inner sleeve (22) an axisymmetric cavity (27) supplied hydraulically in order to form a film of damping oil, this cavity (27) being closed at its ends by two segments (24, 26), **characterised in that** the cavity (27) includes a first portion (31) and a second portion (32) separated from one another by a radially movable segment (29) able to occupy a closed position wherein it forms a controlled sealing barrier between the two portions (31, 32), and an open position wherein the two portions (31, 32) communicate with one another, and **in that** the first portion (31) is supplied hydraulically to form the film of oil.

2. Bearing according to claim 1, comprising a circumferential groove (33) formed at an inner face of the outer sleeve (23), wherein the movable segment (29) is retracted in this groove (33) when it occupies the open position thereof, and wherein the movable segment (29) comes out of this groove (33) to be supported on the outer face of the inner sleeve (22) when it occupies the closed position thereof.

3. Bearing according to claim 2, comprising radial holes (36) passing through an outer face of the outer sleeve (23) and leading to the bottom of the groove (33), and wherein the movable segment (29) includes a plurality of sectors (29a, 29b, 29c) in an arc of a circle each provided with a pin (34a, 34b, 34c) sliding in a radial hole (36).

4. Bearing according to claim 3, wherein the movable segment (29) is formed of three sectors (29a, 29b, 29c) each having an angular extension of 120 degrees.

5. Bearing according to claim 3, comprising an actuator (37) cooperating with the pins (34a, 34b, 34c) to radially move them in such a way as to control the movable segment (29) to move it from the open position thereof to the closed position thereof and vice versa.

6. Bearing according to claim 3, comprising a hydraulic or pneumatic control circuit cooperating with the pins (34a, 34b, 34c) to radially move them in such a way as to control the movable segment (29) to move it from the open position thereof to the closed position thereof and vice versa.

7. Bearing according to claim 6, wherein the control circuit includes a circumferential cavity (38) extending in the thickness of the outer sleeve (23) and wherein the ends of the pins (34a, 34b, 34c) lead, this circumferential cavity (38) being supplied hydraulically or pneumatically.

8. Turbine engine equipped with a bearing according to one of the preceding claims.

9. Turbojet engine comprising a turbine engine according to the preceding claim.
